Europäisches Patentamt

(19) European Patent Office

Office européen des brevets

(11) EP 0 949 770 A1

## (12) EUROPEAN PATENT APPLICATION

(43) Date of publication:
13.10.1999 Bulletin 1999/41

(51) Int. Cl.⁶: **H04H 1/00**, H04H 9/00,
H04N 7/173

(21) Application number: 98106597.2

(22) Date of filing: 09.04.1998

(84) Designated Contracting States:
AT BE CH CY DE DK ES FI FR GB GR IE IT LI LU
MC NL PT SE
Designated Extension States:
AL LT LV MK RO SI

(71) Applicant:
**BetaResearch Gesellschaft für Entwicklung und
Vermarktung digitaler Infrastrukturen mbH
85774 Unterföhring (DE)**

(72) Inventors:
• **Heichler, Johannes
c/o BetaResearch
85774 Unterföhring (DE)**

• **Gillies, David
c/o BetaResearch
85774 Unterföhring (DE)**
• **Henselmann-Weiss, Wolfgang
c/o BetaResearch
85774 Unterföhring (DE)**
• **Kempf, Andreas
c/o BetaResearch
85774 Unterföhring (DE)**
• **Toth, Gabor
c/o BetaResearch
85774 Unterföhring (DE)**

(74) Representative: **Betten & Resch
Reichenbachstrasse 19
80469 München (DE)**

### (54) Bidirectional broadcasting system

(57) A base station for broadcasting or re-broadcasting of TV and/or audio and/or data signals, said station comprising:

means for transmitting downstream signals from said base station to at least one user terminal;

means for receiving upstream signals transmitted from said at least one user terminal;

means for transmitting a high-precision beacon signal as reference signal for the generation of said upstream signals.

Fig. 1

Printed by Xerox (UK) Business Services
2.16.7/3.6

**Description**

FIELD OF THE INVENTION

The present invention relates to a system suitable for RF distribution of analogue and digital television signals as well as forward (here called: downstream) interaction channels.

Technical means for generating a return channel from the user's premises are provided to perform the (here called: upstream) interaction from the user.

Additional means to guarantee a certain quality of the user radiated signal are provided in the system.

Systems like these are often called "LMDS" (Local Multipoint Distribution System) and can be used for re-broadcasting programmes from satellite or cable as well as providing a service for interaction within or besides the broadcasting scenario. The channel bandwidth is flexible for each direction.

BACKGROUND OF THE INVENTION

LMDS comprises systems for distribution of video and audio signals by microwave links in small-area coverage regions. Thus, LMDS often is called "wireless cable" incorporating the distribution of signals from a base station within a cell composed of a defined number of users with set top boxes as terminals. E.g. the carrier frequency range from 40.5 ... 42.5 GHz is a possible operation range for this service.

As a state-of-the-art, analogue (FM modulated) systems for video and audio distribution are beginning to become available on the market. With certain modifications an application for digital carriers (quarternary phase shift keying QPSK modulation) is possible. Return channels for interactions so far are not yet implemented.

The RF distribution is generally performed by using horn antennas with a gain of approximately 15 dBi at the base station site and 35 dBi at the user terminal site. The coverage of the system often is indicated with a radius ranging from 1 ... 5 Km depending on weather conditions (rain attenuation). A basic problem is revealed by the fact that the user terminal has to radiate a return channel signal with sufficient stability and broadcasting quality in the 40 GHz range which is not yet technically solved in terms of a reliable and mass-market suitable solution.

SUMMARY OF THE INVENTION

It is therefore an object of the invention to provide the systematical and technical solution of an LMDS system for the operation in the 40 GHz frequency ressource or above.

It is also an object of the invention to provide technical means for an improvement of the signal radiated by the user terminal (set top box).

A further object of the invention is the facility to separate the 40 GHz signal processing from the modulation processing in a way that

1. A separate outdoor unit may be defined remote from the modulation equipment.

2. The cabeling running from the said modulation equipment to the said outdoor unit can be structured like conventional SMATV (Satellite Mastered Antenna TV) equipment for inhouse distribution.

The invention is defined in the independent claims. The dependent claims define particular embodiments of the invention.

According to one embodiment of the invention there is provided a base station consisting of a transmitter system composed of a radiation and reception antenna as a combined or separate devices, a power amplification stage, an upconversion stage as well as a multicarrier modulation equipment for yielding one or more carriers for broadcasting or interaction activity with variable symbol rates and signal bandwidths. The base station also consists of reception paths comprising low noise receivers connected to the antenna, down converters to present the received spectrum within a defined IF range as well as analyser - demodulator stages to exploit the carriers received. Additional links of the base station to other telecommunication networks as e.g. satellite segments are provided. In this case suitable interfaces to the said networks are to be defined, which can be done in a well-known manner.

According to an aspect of the invention there is provided a highly stable frequency reference ("beacon") to be radiated together with the other carriers at a well-defined location in the spectrum with the purpose to offer a return channel transmission reference frequency for the user terminals.

According to an embodiment of the invention there is provided a user terminal at the users site to receive the said signals radiated by the base station and to process them in a suitable manner for enabling broadcasting reception and mutual interaction between the base station and the user.

According to a further embodiment of the invention data signalling between the base station and the user terminals as well as vice-versa is provided. Details of signalling as e.g. the data format, the protocols etc. may be a subject to change depending on special solution.

In an embodiment of the invention to be described in detail hereinafter the LMDS system structure comprises a base station with a partitioning of the frequency ressource as well as a user terminal.

In another embodiment of the invention to be described in detail hereinafter the technical means for receiving the beacon as well as the downstream carriers comprises a low noise amplifier in combination with a block down converter. Suitable filters to reject image frequencies are also applied.

In a further embodiment of the invention to be described in detail hereinafter the technical means for exploiting the highly stable reference frequency comprises oscillators, synthesizers and mixers as well as suitable filters.

In a further embodiment of the invention to be described in detail hereinafter the technical means for radiating the upstream carrier from the user terminal comprises a suitable modulator, a sufficient stable local oscillator and a suitable upconverter. Suitable filters to reject image frequencies are also applied.

In a further embodiment of the invention to be described in detail hereafter the technical means for exploiting the user radiated upstream carriers at the base station's site comprises FFT (Fast Fourier Transform) circuits or MCD (Multi Carrier Demodulator) as well as a stack of single carrier demodulator circuits.

In a further embodiment of the invention to be described in detail hereafter the technical means and structures for enabling single user as well as SMATV featured operation at the user terminal's site comprises DiSEqC™ (Digital Satellite Equipment Control) or analogue switching criteria compatible switches as well as conventional in-house cabeling equipment.

BRIEF DESCRIPTION OF THE DRAWINGS

The invention will hereinafter be described with reference to the accompanying drawings, in which:

> FIG. 1 shows the structure of one so-called LMDS cell;
> FIG. 2 depicts the repeated array of a plenty of said cells;
> FIG. 3 expresses an example of the spectrum yielded by the base station as well as the user terminal;
> FIG. 4a shows the downstream generation by block conversion of completely backhauled carrier combs;
> FIG. 4b describes the downstream generation by power combination of single modulator signals;
> FIG. 5 describes a compact solution for the processing of the downstream carriers, the beacon and the upstream carrier(s);
> FIG. 6 describes the application of FIG. 5 as a component to be used for construction of a universal outdoor unit for in-house distribution;
> FIG. 7 demonstrates the reception of the upstreams with a stack of single demodulators;
> FIG. 8 demonstrates the same reception with a multicarrier demodulator;
> FIG. 9 demonstrates the same reception using an FFT stage;
> FIG. 10 describes the structure of a single user application;

> FIG. 11 describes the same structure for multi user operation like SMATV;
> FIG. 12 shows schematically the aerial structure composed of the elements of FIG. 6 and a waveguiding/filtering system.

DETAILED DESCRIPTION OF THE EMBODIMENTS

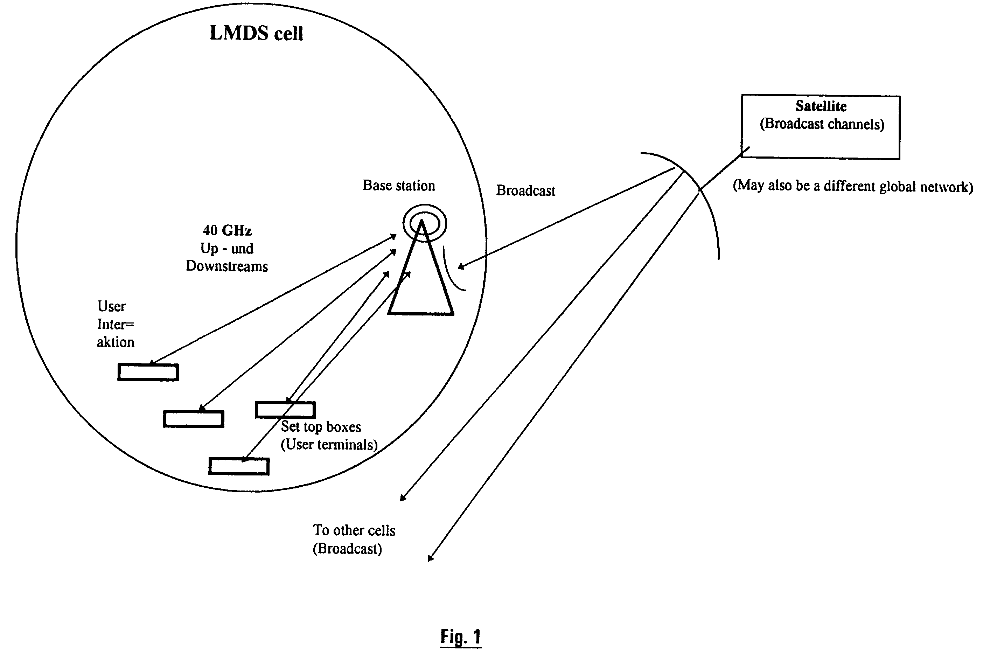

According to an embodiment of the invention, an LMDS structure (FIG. 1) generally shows up as a point - to - multipoint distribution on one hand concerning the paths running from the base station to the user terminals and as a multipoint - to - point distribution on the other hand concerning the paths running from the user terminals to the base station. No signal way is switched bypassing the base station.

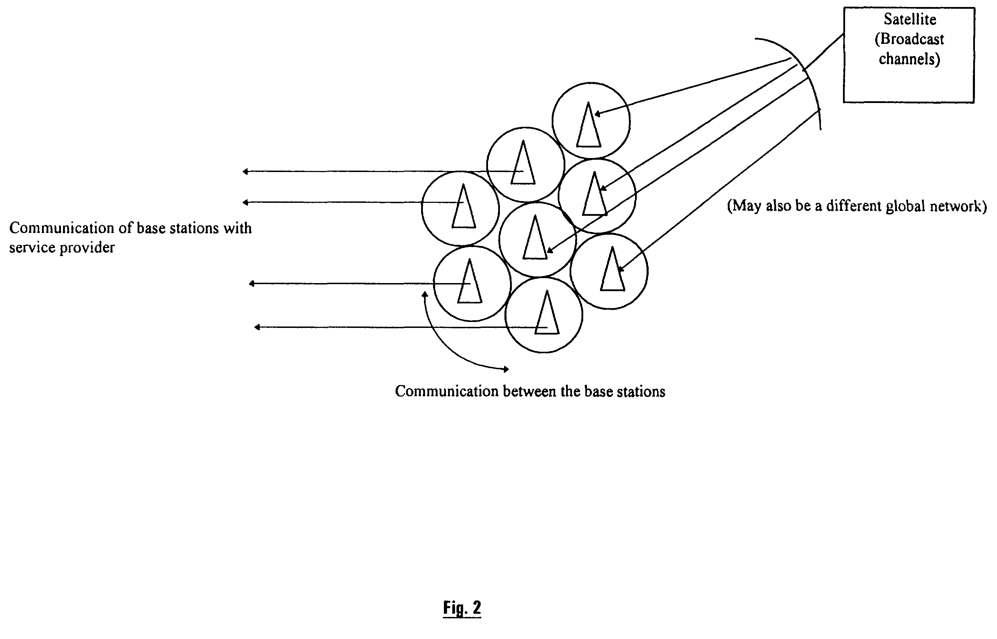

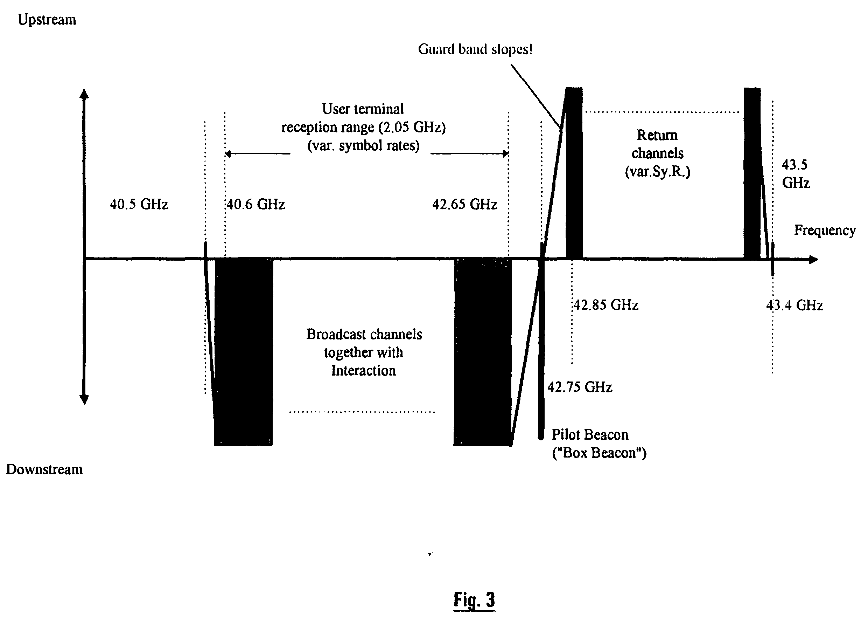

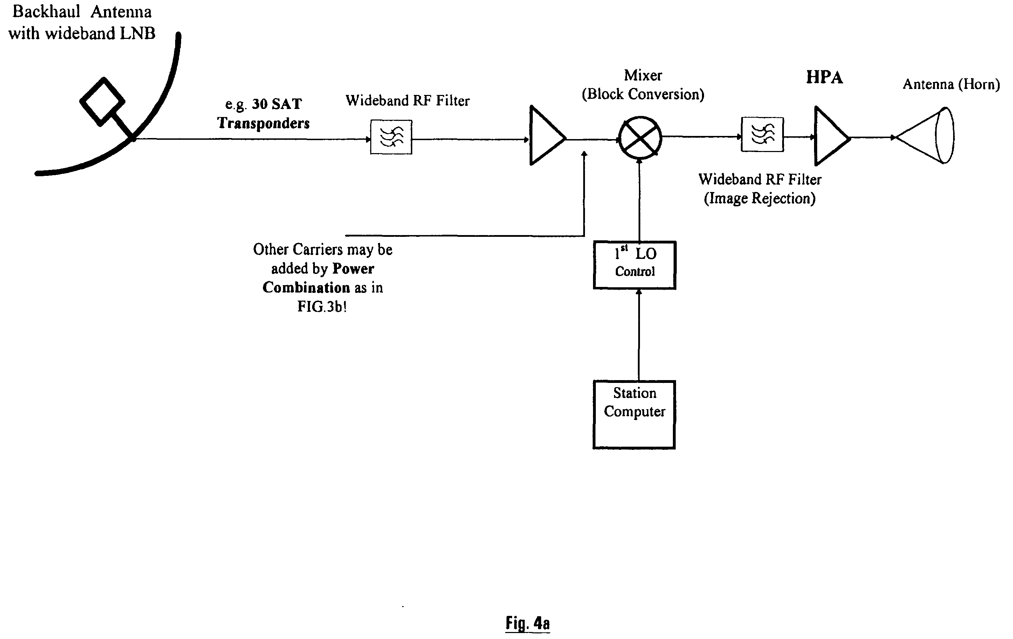

The LMDS structure repeats itself (FIG.2) in the shape of so-called cells comprising an entity of users forming a group in the sense that this group is supplied with all necessary signals by the base station. The base station itself comprises the facility to exchange signals with other networks as e.g. satellite space segments. It may consist of RF processing equipment as well as baseband processing equipment in its farthest sense. FIG.3 shows the possible spectral ressource exploited by the communication partners: It comprises for two polarizations, horizontal and vertical, the downstream carriers denoted from e.g. 40.6 ... 42.65 GHz, a beacon located at e.g. 42.75 GHz as well as the upstream carriers denoted from e.g. 42.85 ... 43.4 GHz. Suitable guard bands are inserted at the borders of each particular ressource.

The generation of the downstream RF signal is one major task of the base station.

Generally there are two possibilties to radiate downstreams in a wide band multicarrier manner:

> a) Re-Broadcasting e.g. a complete satellite segment by block upconversion to 40 GHz, without remodulation. In this case, the content of the downstreams is not changed.

> b) Remodulation of a selected subset of channels, e.g. from telecom's cable systems or satellite with adoption of adjacent data information like NIT (Network Information Table) and/or generation of interaction. In this case, a construction of power combination at an IF or RF level may be provided.

FIG. 4a shows the first approach: A satellite segment is received as a whole by a so-called "backhaul antenna" and firstly downconverted to the SAT IF band by a so-called wide band LNB (Low Noise Block Converter). This frequency band is then filtered and power levelled to adopt to the upconversion stage following. After another filter for image band rejection the re-broadcasting signal is power amplified by a HPA (High Power Amplifier) to supply the antenna with sufficient amplitude per channel required by the overall path link budget.

It is important to note that for this kind of multicarrier uplink sufficient power amplifier backoff must be provided to keep inter-carrier-intermodulation below certain values. Thus, the total available linear operation power of an N - carrier amplifier must be backed off by at least BO = 20 log(N), i.e. for a single carrier, no backoff is necessary, for two carriers, 6 dB backoff must be provided due to the double beat frequency amplitude etc.. This results that for large re-broadcasting scenarios HPAs with sufficient saturation power must be implemented, which can be done by using TWTs (travelling wave tubes) or wide-band high-power semiconductor amplifiers.

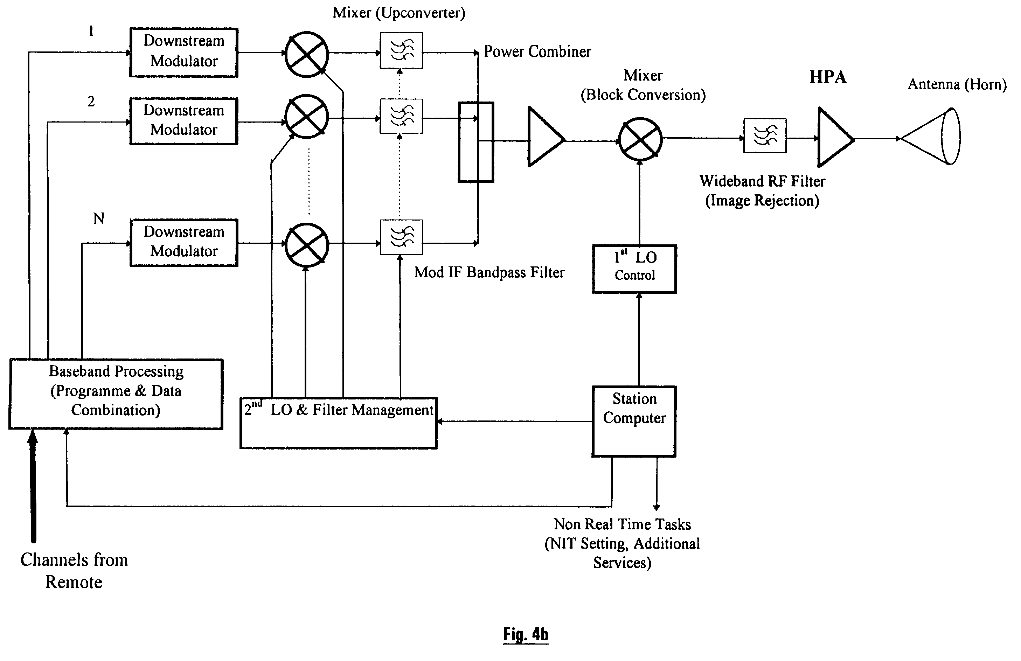

FIG. 4b shows the power combination approach for the IF or the RF level, here drawn as an example for the IF level: TV programmes as well as data may be collected from remote ("channels from remote") e.g. by reception and demodulation. In a baseband processing stage, which may be of distributed structure, the transport data streams are combined in a wanted manner. Here, also interaction channels can be inserted. Then the resulting streams are fed into the downstream modulators providing at each output an e.g. QPSK modulated digital carrier signal. These carriers are upconverted in a first stage by a LO (local oscillator) and filter management, power combined to achieve a carrier comb of all signals as a sum and then further upconverted to RF level. This is the resulting frequency multiplex for the HPA to be radiated to the user terminals.

Of course, a combination of both solutions is possible, e.g. if re-broadcasting channels are mixed with embedded or non-embedded interaction downstreams.

Another solution is the combination of single carriers at the RF level by single amplifiers, filters and power combiners, as it is known from satellite uplinks, or the use of one antenna per channel, but these solutions are not described here in detail because of the lack of economy when a plenty of carriers (30 transponders per satellite segment / one polarization!) shall be radiated.

The communication between the cells as well as the communication with a remote service provider may be realized by using conventional foreign networks (telecom's networks) or alternatively special networks tailored for this purpose.

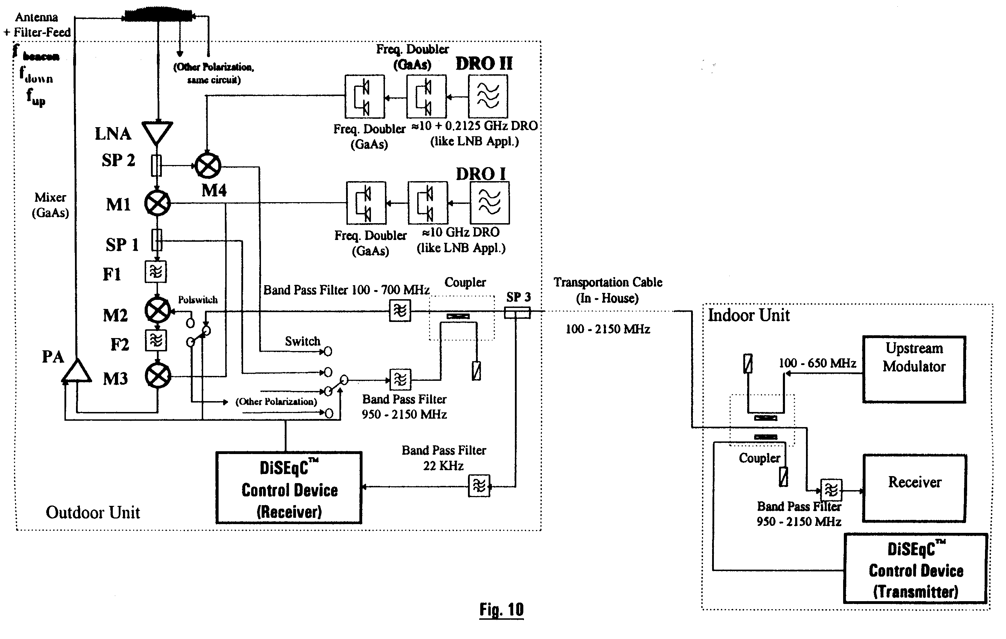

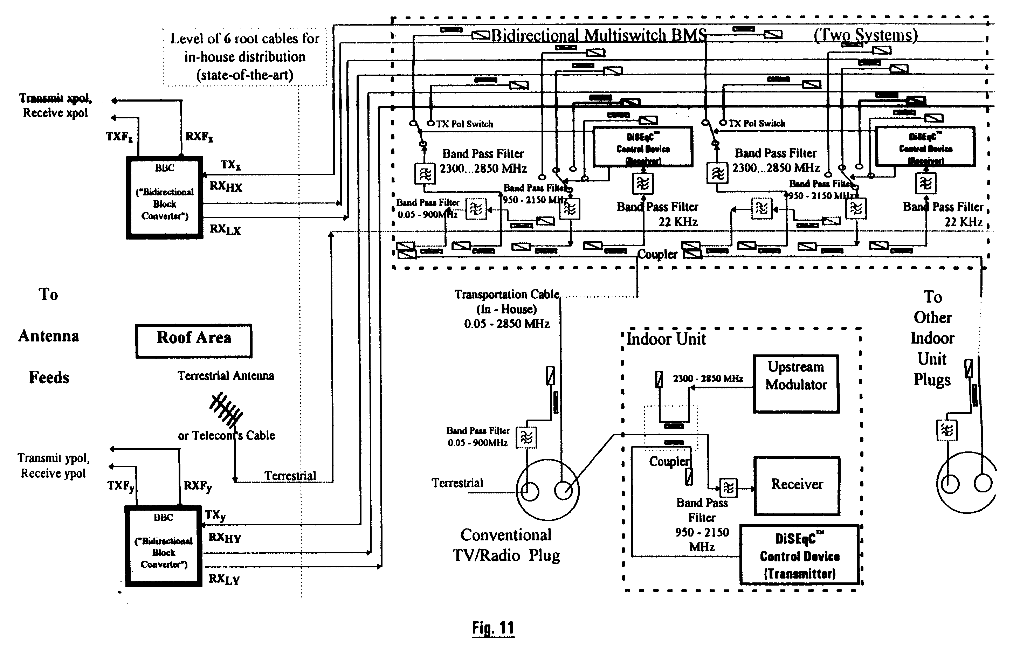

The so-called user terminal mainly consists of two blocks (see also FIG.10): An outdoor unit and an indoor unit. In case of a house distribution (see also FIG.11) of LMDS IF signals, the user terminal embodies each path being rooted from the building roof (outdoor) via cables, switches etc. through the building to the set top box into the users room (indoor). The set top box comprises means for reception (selection) of an IF level downstream channel as well as means for transmission (modulation) of an IF level upstream channel. In addition to this, means for transmitting a command set (e.g. DiSEqC™) are provided for governing the outdoor unit / in-house distribution switches.

The purpose when exploiting the highly stable radiated beacon signal is to upconvert the modulation signal of the upstream by keeping the quality of the said beacon clean carrier. In practice, the upconversion incorporates some necessary filtering to separate the wanted signals from unwanted image signals as well as from wanted signals in the spectral vicinity of the beacon. This filtering is hardly feasible at the 40 GHz level due to the limitation of slope steepness being necessary for separation. Thus, filtering must be performed at a suitable IF level.

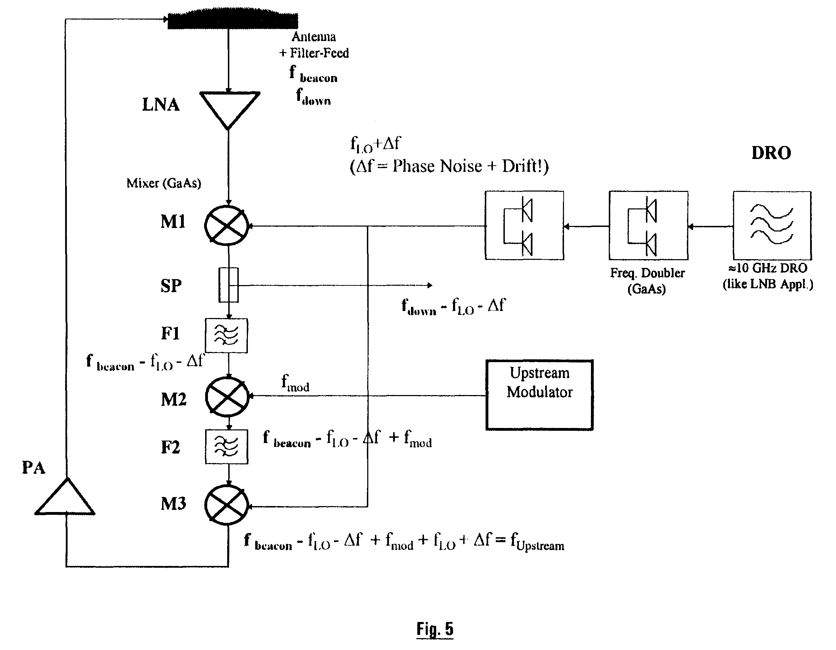

Converting the high quality beacon signal to an IF level unfortunately means involving another low - quality local oscillator in the process and therefore a degradation of the result. A way out of this problem concerns a further embodiment of the invention comprising a so-called differential mixing stage as shown in a specific embodiment in FIG. 5.

The same stage serves for downconverting the downstream carriers to a suitable IF level, and the same stage serves for upconverting the upstream carrier(s) to the wanted 40 GHz RF level.

A downconversion of the beacon signal is performed by a first mixing, the resulting signal is filtered, and a modulation then is added. The modulated signal is filtered and then upconverted, thereby the jitter of the local oscillator signal is cancelled out. Simultaneously, a downconversion of the downstream signal $f_{down}$ is performed using the first mixer also used for the beacon signal. The thereby downconverted signal is coupled out using a beam splitter. This will become more apparent from the following detailed description in connection with Fig. 5.

FIG. 5 shows the technical block circuit diagram for realization: A suitable antenna consisting of e.g. a dish reflector or a lens microwave collimator is equipped with a multiport feed enabling the separated routing of transmission and reception power. Here, the two ports for one linear polarization are shown.

At the reception port, a low noise amplifier LNA is connected to enhance the reception signal power of the two signals $f_{beacon}$ and $f_{down}$. A first mixing stage M1 downconverts these signals to an IF level with the aid of a suitable oscillator DRO and two fequency doublers postconnected. This oscillator signal enters M1 with the frequency $f_{LO} + \Delta f$ where $\Delta f$ denotes phase noise and drift introduced.

As a first result, the IF level of the downstreams is achieved by a power splitter SP presenting the signals at

$$f_{down} - f_{LO} - \Delta f$$

for the user terminal IF input. The value $\Delta f$ has in this case to cope with user terminal input phase noise and drift requirements like conventional satellite downlink LNBs feature.

Note, that the $\Delta f$ magnitude occurs at this point with negative sign.

Further, a filter F1 extracts the downconverted beacon signal at the spectral level

$$f_{beacon}-f_{LO}-\Delta f$$

behind the second port of SP with sufficient bandwidth to keep the entire $\Delta f$ magnitude for further processing.

In a next step, the modulation frequency $f_{mod}$ is added by a second signal multiplier M2 which results a spectral level:

$$f_{beacon}-f_{LO}-\Delta f+f_{mod}$$

and which is filtered again with sufficient bandwidth to keep the entire $\Delta f$ magnitude.

A last upconversion of this signal is performed by a third mixer M3 yielding:

$$f_{beacon}-f_{LO}-\Delta f+f_{mod}+f_{LO}+\Delta f = f_{beacon}+f_{mod}$$

with the basic result that the signal entering the transmitter power output stage PA only comprises the errors of the two components $f_{beacon}$ and $f_{mod}$. Since these errors are well - defined and small ($f_{mod}$ is a frequency within the range of 100 MHz or somewhat more and thus can be easily generated by crystal oscillator technique), the upstream signal achieves broadcasting quality with only few ppm drift and phase noise avoiding exhaustive costs.

In principle, the beacon signal operating as a reference frequency could also be generated at the user-site, e.g. at the outdoor unit or even at the set-top box as soon as such a solution becomes technically feasible in terms of the quality and the costs of the corresponding oscillators being available.

According to a further embodiment, the incoming upstreams are located at arbitrary places in the provided spectral ressource range (see FIG.3). In case of TDMA (Time Division Multiple Access) operation the suitable modulation method will be a burst modulation starting and stopping carrier radiation synchronously to a master clock or asynchronously by a base station command, in case of continuous operation, user carrier switching on and off will only be done at beginning and end of transmission by base station frequency management.

In both cases, suitable demodulation equipment serves for extracting digital data from carrier. This extraction can be generally performed by three means:

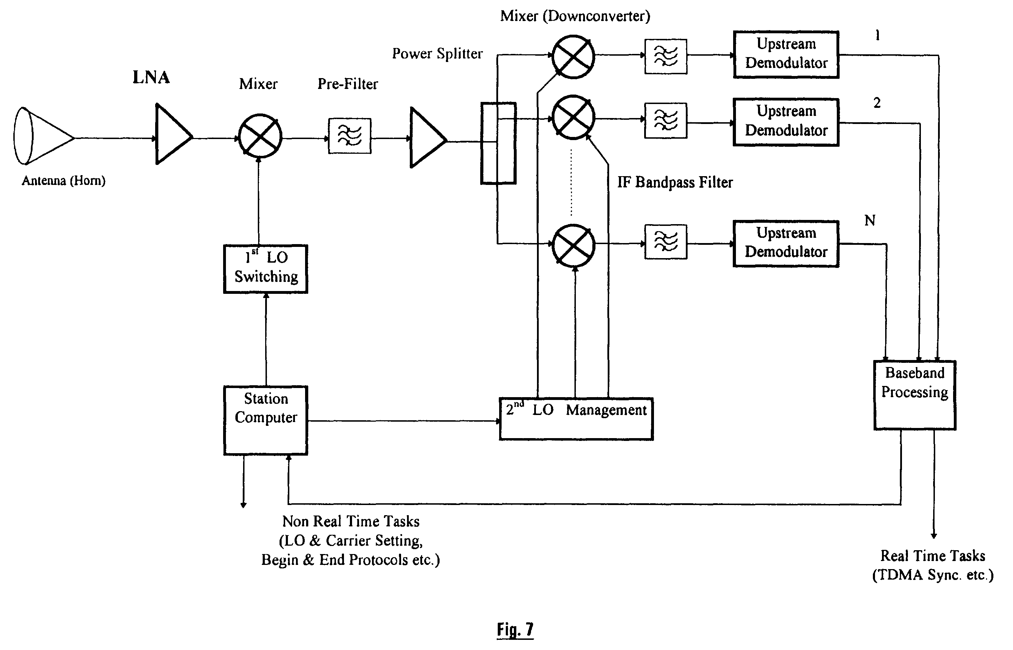

1) Separate demodulators, as many as carriers are on air, 2) so-called multicarrier demodulators (MCD) being able to demodulate N carriers by one device, 3) so-called fast fourier transformers (FFT) being capable to analyse the whole spectrum being on-air and to present the result by real and imaginary component data, which is similar to demodulation. The embodiments shown in Figures 7 to 9 respectively illustrate these three possibilities for demodulation.

FIG. 7 shows solution 1) with the separate demodulators: The incoming RF signal as a whole is in a first step received by a sufficient wide-angle antenna, then low - noise amplified and downconverted with a first LO to an IF level for better further processing. This LO might be switched in frequency for suitable range selection, if necessary. Then, the signal is pre-filtered and amplified a second time to be splitted by a power splitter and to be downconverted by an N-fold downconverter bank followed by an N-fold filter bank for the second IF level. The number N corresponds to the number of subscribers associated to one base station and therefore to one LMDS cell. The downconverter oscillator frequencies for the downconverter bank are organized by a so - called $2^{nd}$ LO management stage comprising a synthesizer stage with a computer interface. This interface accepts data from the station computer serving for the station management as a whole. The station computer is also a means for communication with other base stations or the central service provider as well as for processing the internal station data streams.

The filter bank is followed by an N-fold demodulator bank being capable to present the upstream carrier content in the baseband format for further baseband processing. This processing depends on the momentaneous LMDS return channel application and therefore is a free parameter. Among other things it comprises the separation of real-time and non real-time tasks of baseband processing.

E.g. real-time tasks are:

- Direct user interaction,
- TDMA processing (synchronization) in case this is used,
- Scrambling for conditional access.

E.g. non real-time tasks are:

- Setting of the upstream carrier frequencies and transmitting them to the individual subscribers,
- Commanding the begin and end of a user session as well as receiving wishes from user terminals for beginning and ending a session.

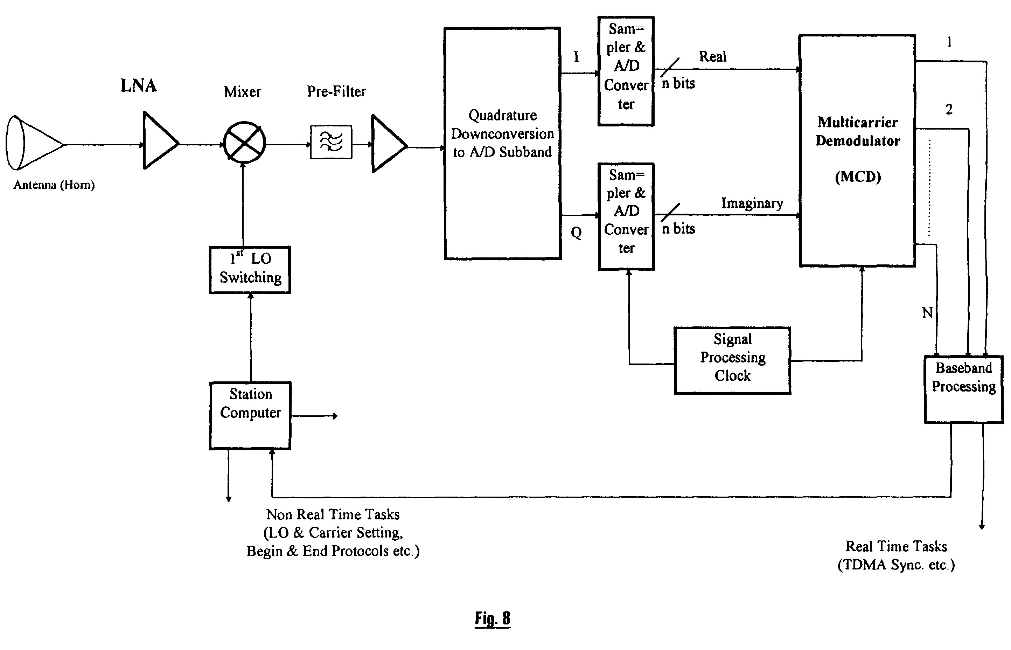

FIG. 8 shows solution 2) with the MCD circuit:

The signal reception is performed in a similar way to solution 1). The difference in this case is that the further processing is done by a quadrature downconversion stage presenting an I and Q component of the IF composite signal. Two sampling A/D - converters follow to digitize the signal being then represented as real and imaginary numbers of n bits width at the outputs. The multicarrier demodulator postconnected is a sufficient fast integrated circuit or a composition of those presenting at its N outputs, corresponding to the N subscribers, the demodulated baseband signals. The further processing is identical to solution 1).

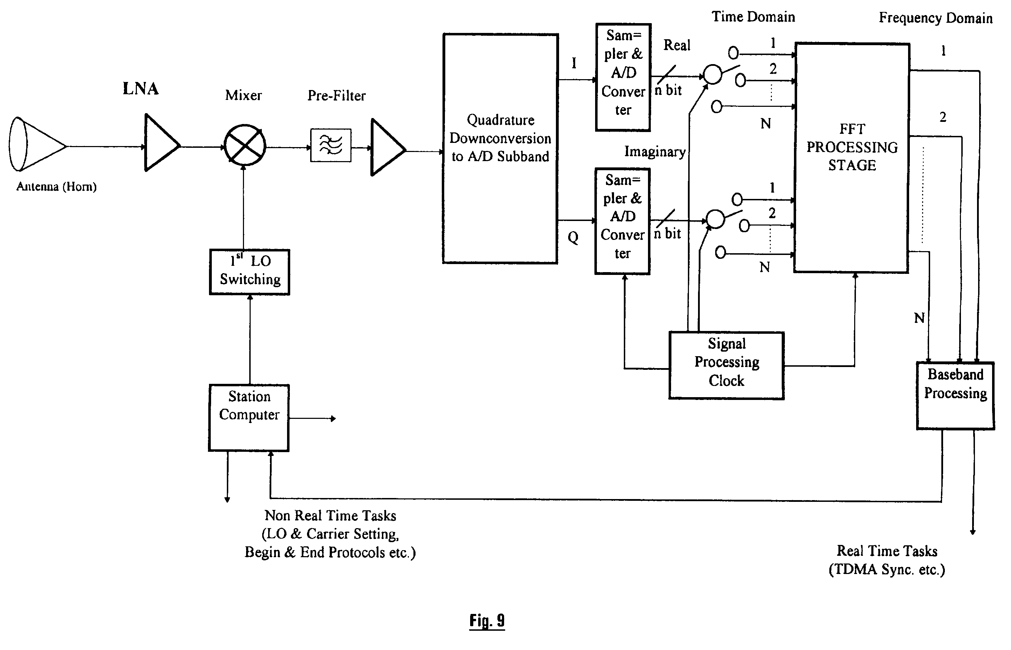

FIG. 9 at last demonstrates the FFT solution 3). The basic idea is to analyse the time - domain received signal according to the laws of fourier transform. The maximum number of subscribers must be known before implementation, i.e. the FFT stage must be tailored to a sufficient number of carriers occurring.

Generally, this FFT unit consists of so-called butterfly networks accepting at their inputs N complex time-domain samples at word length n and presenting at their outputs N complex coefficients at word - length n describing the input signal in terms of real and imaginary component at a spectral one-of-N location. This is similar to the demodulation representation of the single carrier at the respective location.

The signal is received in a similar manner to the other solutions, i.e. it is first downconverted and pre-filtered as well as amplified. Since the FFT stage needs real and imaginary samples as the MCD does, a quadrature downconversion is provided as well. The grade of the downconversion depends on the A/D converters sampling rate and thus on the technology available. Above all, Shannon's sampling law must be fulfilled describing that a signal with the maximum frequency component at f must be sampled with 2f. In practice, the quadrature downconversion will be done in a way that the lowest frequency component is near baseband. The highest frequency component of the signal must be then within the range that is technologically feasible by the hardware.

The two rotational switches postconnected to the A/D converters denote the periodic sampling process feeding the sampled signal data into the FTT processing stage with a speed being at least $1/T = 2f$ when T is the period between two switch positions and f is the maximum frequency component of the sampled signal.

The further processing of the outgoing N complex demodulation products is identical to the other solutions.

The applicability of the MCD and FFT solution depend on the technology available since a large number of upstream carriers corresponds to a large processing bandwidth and thus, speed, which only can previously be presented by advanced ASIC technology. However, if these approaches are feasible for a specific solution, the single demodulator stack solution with its enhanced amount of hardware equipment can be circumvented.

Generally, LMDS is planned to be a system joining one user terminal (set top box) with one outdoor antenna unit. Nevertheless, regarding certain difficult reception scenarios like urban areas, it might be necessary to install one outdoor unit on the roof of a building to supply a plenty of user terminals with downstream signals on one hand and collecting the upstream signals on the other hand.

In the following embodiment, the principle depicted by FIG. 5 is extended to a single user as well as to an SMATV - like application.

First, FIG. 10 shows the compact solution of the single user environment fulfilling the operation requirements of the spectrum depicted in FIG. 3. Indoor - and outdoor unit are interconnected by one single transportation cable carrying the signal composite spectrum from e.g. 100 ... 2150 MHz as an IF layer. Additional command signals are supplied via the DiSEqC™ command set becoming a state-of-the-art standard in modern in-house satellite distribution networks. The indoor unit (set top box) principally consists of a downstream receiver ranging from e.g. 950 - 2150 MHz, a modulator for the upstreams ranging from e.g. 100 - 650 MHz as well as a DiSEqC™ control device for governing the outdoor unit.

The outdoor unit consists of a mixing and downconversion stage for each polarization, H and V, as basically designed in FIG. 5 with a switch for selecting the downstream high - and low band by two DROs (Dielectric Resonator Oscillator) DRO I and II. This is known from the satellite distribution scenario ("Universal LNB") and embodies the fact that the user terminal IF frequency range is limited to 1.2 GHz versus the whole reception IF range is 2.05 Ghz.

In this solution example two frequency doublers are added for quadrification of the DRO frequency. The two bands are thus distinguished by applying a different oscillator frequency e.g. of $f_1 + 4 \times 0.2125\,\text{GHz} = f_1 + 0.85\,\text{GHz}$ to the mixing stages. This is similar to the satellite reception applying 9.75 GHz + 0.85 GHz =. 10.6 GHz. The upstream processing is performed as shown in FIG. 5 by exploiting the beacon signal. An emergency shutoff is provided as well as a possible power control by the indoor unit, signalled by the base station, to adopt the radiated power to the geographical location (distance). This is also kown from GSM mobile telephone operation. A control device receiving the DiSEqC™ commands is also part of this stage. Suitable filtering is provided for signal selection.

Couplers and power splitters are provided for signal addition / separation for transportation over single cable.

This cable shall be a conventional high-quality satellite IF distribution cable with a length of - depending on cable loss - up to approximately 50 meters.

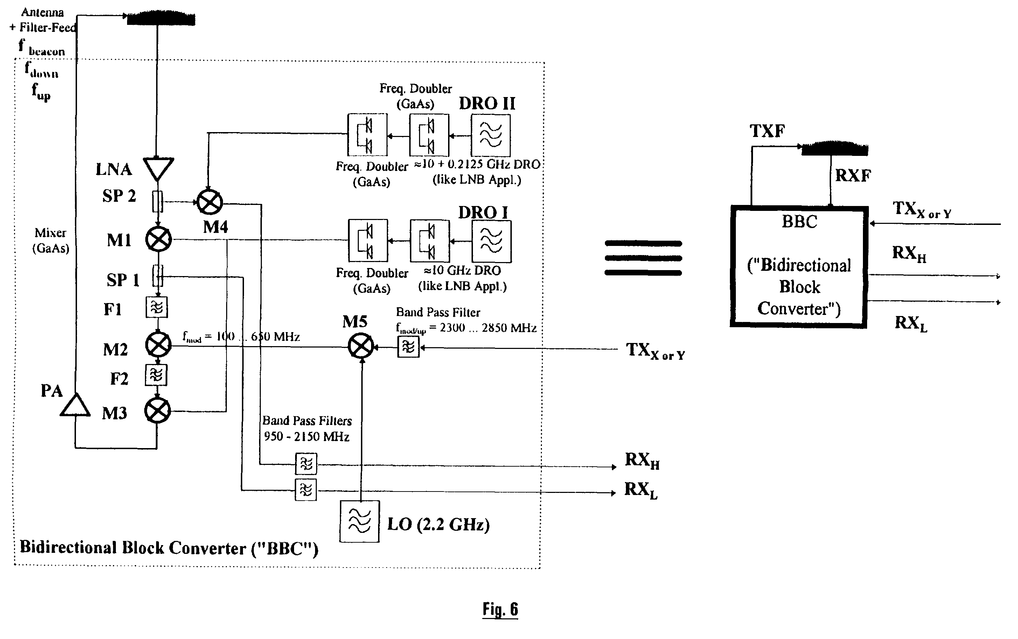

The multi user terminal application is also a subject of this embodiment: FIG. 6 firstly shows how the system depicted by FIG. 5 can be concentrated and somewhat modified to one block being able to form a sub-element for an outdoor unit in the environment of a house distribution. This block unit shall also be called a Bidirectional Block Converter ("BBC") referring as an analogy to the state - of - the - art LNB (Low Noise Block Converter) being now defined for bidirectional operation. It comprises, in addition to the elements described in FIG. 5, a mixer M5 and an LO at e.g. 2.2 GHz or another suitable frequency to downconvert the upstream IF level carriers at e.g. 2300 ... 2850 MHz running over the house distribution down to the values of e.g. 100 ... 650 MHz demanded in FIG. 5. This is provided to keep the IF frequency range in the cable below 950 MHz free in order to enable terrestrial in house distribution as well. Thus, the BBC has five elementary ports: The two ports at the RF level for the transmit feed TXF and the reception feed RXF as well as the two receive ports for reception in the high and the low band $RX_H$ and $RX_L$ at the IF level. Only one additional port for transmission $TX_{x\,or\,y}$ for each polarization is necessary.

Using this block, the so-called LMATV BBC (= LMDS MASTERED ANTENNA TELEVISION BIDIRECTIONAL BLOCK CONVERTER) can be constructed: FIG. 11 depicts an in-house distribution with this kind of block converter: Two BBCs, applied to the corresponding antenna feeds, are used to supply the in-house IF level with the eight possible combinations composed of bands and polarizations:

Table 1

| Transmit | | Receive | |
|---|---|---|---|
| XPOL | YPOL | XPOL | YPOL |
| TXband | | HighBand | |
| TXband | | | LowBand |
| | TXband | LowBand | |
| | TXband | | HighBand |
| TXband | | LowBand | |
| TXband | | | HighBand |
| | TXband | HighBand | |
| | TXband | | LowBand |

Because the transmit band is not composed of two particular ranges (TXband only), eight combinations are sufficient and can be carried by six conventional SAT root cables as they are commonly used for two-position - SAT in-house distributions. Four cables are then used for the downstream signals as it is the case in the SAT application: Reception of high and low band as well as x and y polarization. Two additional cables serve for transmission: X and Y polarization of the upstreams. (In the case of a former two SAT in-house distribution with eight cables, two cables can be rejected). Additionally, the SAT roof antenna must be replaced by the LMATV aerial described above.

Since the outdoor unit has now to process a plenty of user terminal return carriers, power control and emergency shutoff have now to be performed by cutting off the individual modulation signal of each user terminal separately by base station command.

A Bidirectional Multiswitch BMS replaces the old unidirectional in-house distribution multiswitches as it is drawn here for two user outlets. This switch comprises connections for the six LMDS and one terrestrial root cables being looped-through as well as for the user outlets leading to the wall plugs. The user outlet cable carries the composite signal with terrestrial or cable TV signals at e.g. 0.05 ... 900 MHz, SAT IF signals at e.g. 950 ... 2150 MHz and upstreams at eg. 2300 ... 2850 MHz. Inside the switch, these particular signals are coupled out of / into the root cables by suitable couplers. Suitable filters serve for the signal separation being necessary to avoid crosstalk. The DiSEqC™ control is performed in this switch as well, now simulating an LMATV BBC to the indoor unit. In case a command is sent, the BMS configures the corresponding outlet by setting the switches to the demanded positions. Thus, a simple solution with low costs is possible for LMDS replacing the usual SAT distribution.

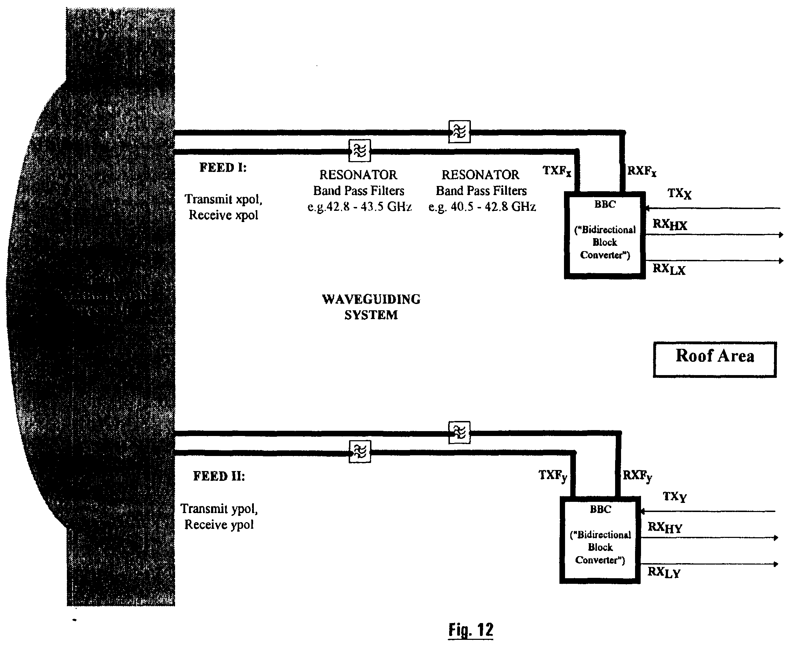

FIG. 12 shows the RF part of the aerial itself in a schematic manner.

The two BBCs supply and achieve their signals via their transmit ports $TXF_{x/y}$, as well as via their receive port connections $RXF_{x/y}$ by suitable 40 GHz waveguides. The IF ports $TX_{X/Y}$ and $RX_{H/L/X/Y}$ shall be realized with suitable coaxial cable connections. Transmit and receive paths in the feed combination system must be sufficiently decoupled to avoid end-around oscillations within the BBC - aerial system.

## Claims

1. A base station for broadcasting or re-broadcasting of TV and/or audio and/or data signals, said station comprising:

   means for transmitting downstream signals from said base station to at least one user terminal;
   means for receiving upstream signals transmitted from said at least one user terminal;
   means for transmitting a high-precision beacon signal as reference signal for the generation of said upstream signals.

2. A base station according to claim 1, wherein said base station forms a part of an LMDS provider-site distribution system, and wherein said base station of said system further comprises one or a combination of the following:

   means for baseband processing, modulation, and power combination of downstream carriers and/or
means for block conversion and power amplification of downstream carriers as well as demodulation of arbitrary numbers of upstream carriers;
means for station management;
means for controlling interactively communication frequencies and power;
means for communication with adjacent cells and a remote service provider; means for communication with other networks like satellite and/or cable.

3. A base station according to one of the preceding claims, said base station comprising:

an upstream reception system with a stack of single demodulators comprising:
means for low noise amplification;
means for downconverting from RF to a first IF level;
means for power splitting;
a downconversion mixer bank for individual upstream carrier downconversion;
means for generating individual LO frequencies;
means for filtering;
a demodulator bank;
means for baseband processing to exploit the incoming demodulated upstream data.

4. A base station according to claim 3, further comprising means for arbitrarily configuring the demodulation mode.

5. A base station according to one of claims 1 or 2, further comprising:

an upstream reception system with a multicarrier demodulator system comprising:
means for low noise amplification;
means for downconversion from RF to a first IF level;
means for quadrature downconversion;
means for sampling and for A/D-conversion for subsequent signal processing;
means for analytical multicarrier demodulation signal processing;
means for baseband processing.

6. A base station according to one of claims 1 or 2, said base station comprising:

an upstream reception system with a FFT demodulation system comprising:
means for low noise amplification;
means for downconversion from RF to a first IF level;
means for quadrature downconversion;
means for sampling and for A/D-conversion for subsequent signal processing;
means for analytical FFT signal processing;
means for baseband processing.

7. A user-site reception system for receiving TV and/or audio and/or data signals transmitted from a base station, said system comprising:

means for receiving downstream signals transmitted from a base station;
means for generating upstream signals to be transmitted to said base station using a high-precision signal which can be transmitted from said base station as a reference.

8. A user site reception system according to claim 7, wherein said system is a reception-interaction system for a LMDS system, said reception system further comprising:

means for command reception from a base station;
means for user interaction with said base station.

9. A system according to one of claims 7 or 8, said system comprising:

means for exploiting the high-precision beacon signal, said mixer comprising:
frequency processing means for upconverting the upstreams, given by modulator IF outputs, without any influence of parasitic phase noise and drift generated by receiver located conversion LOs;
means for downconversion of downstreams;
means for suitable filtering of frequency bands.

10. A reception system according to one of claims 7 to 9, wherein said means for exploitation of a high-precision beacon signal comprises:

means for downconverting said beacon signal using a first local oscillator frequency;
means for upstream modulation of said upstream signal onto said downconverted signal;
means for upconverting said upstream modulated downconverted signal using said first local oscillator frequency.

11. A reception system according to one of claims 7 to 10, comprising:

at least one upstream signals generating means according to one of claims 7 to 10;

means for processing of polarizations and frequency bands for up- and downstreams;

means for connecting to an IF frequency level to be connected to an in-house distribution infrastructure;

means for connecting to an RF frequency level to be connected to a radiator/receptor;

means for power amplification.

12. A single user outdoor unit, comprising:

at least one upstream signal generating means according to one of claims 7 to 11;

switching means for switching between frequency bands and polarizations for downstreams and between polarizations for upstreams;

means for connecting to a IF frequency level to be connected to an indoor unit.

13. A unit according to claim 12, further comprising means for remote control (e.g. DiSEqC™) for functions including at least power control and emergency shutoff.

14. An in-house distribution component, comprising:

switching means for switching the connection between individual user indoor units and the outdoor unit.

15. An in-house distribution component according to claim 14, wherein said switching means comprises means for bidirectional switching between the user indoor units and the outdoor unit.

16. An in-house distribution component according to claims 14 or 15, wherein said unit further comprises:

means for controlling the switching in response to signals received from an indoor unit;

means for connecting to an IF frequenecy level to be connected to an indoor unit.

17. An indoor unit to be connected to an outdoor unit according to claim 12 or 13 or to an in-house distribution component according to one of claims 14 to 16, said indoor unit comprising:

receiving means for the reception of downstream signals;

demodulation means for demodulating the downstream signals;

modulation means for generating an upstream carrier;

control means for generating switching commands.

18. An indoor unit according to claim 17, further comprising one of the following:

means for exploiting base station commands to allocate upstream carriers and/or power;

means to control or shut off the upstream carrier power.

Satellite
(Broadcast channels)

(May also be a different global network)

Broadcast

LMDS cell

Base station

40 GHz
Up - und
Downstreams

User
Inter=
aktion

Set top boxes
(User terminals)

To other cells
(Broadcast)

Fig. 1

10

Satellite
(Broadcast
channels)

(May also be a different global network)

Communication of base stations with
service provider

Communication between the base stations

**Fig. 2**

EP 0 949 770 A1

Upstream

Guard band slopes!

User terminal
reception range (2.05 GHz)
(var. symbol rates)

Return
channels
(var.Sy.R.)

43.5
GHz

40.5 GHz | 40.6 GHz | 42.65 GHz

Frequency

42.85 GHz | 43.4 GHz

Broadcast channels
together with
Interaction

42.75 GHz

Pilot Beacon
("Box Beacon")

Downstream

EP 0 949 770 A1

**Fig. 3**

Fig. 4a

Backhaul Antenna with wideband LNB

e.g. 30 SAT Transponders

Wideband RF Filter

Other Carriers may be added by **Power Combination** as in FIG.3b!

Mixer (Block Conversion)

1st LO Control

Station Computer

Wideband RF Filter (Image Rejection)

HPA

Antenna (Horn)

Antenna (Horn)

HPA

Wideband RF Filter
(Image Rejection)

Mixer
(Block Conversion)

1st LO
Control

Station
Computer

Non Real Time Tasks
(NIT Setting, Additional
Services)

Power Combiner

Mod IF Bandpass Filter

LO & Filter Management

Mixer (Upconverter)

2nd LO & Filter Management

Downstream
Modulator

Downstream
Modulator

Downstream
Modulator

1

2

N

Baseband Processing
(Programme & Data
Conbination)

Channels from
Remote

Fig. 4b

Antenna
+ Filter-Feed

$f_{beacon}$
$f_{down}$

LNA

$f_{LO} + \Delta f$
($\Delta f$ = Phase Noise + Drift!)

DRO

Mixer (GaAs)

M1

Freq. Doubler
(GaAs)

$\approx 10$ GHz DRO
(like LNB Appl.)

SP

$f_{down} - f_{LO} - \Delta f$

F1

$f_{beacon} - f_{LO} - \Delta f$

M2

$f_{mod}$

Upstream
Modulator

F2

$f_{beacon} - f_{LO} - \Delta f + f_{mod}$

PA

M3

$f_{beacon} - f_{LO} - \Delta f + f_{mod} + f_{LO} + \Delta f = f_{Upstream}$

Fig. 5

TX$_{X\,or\,Y}$

RX$_H$

RX$_L$

RXF

TXF

BBC
("Bidirectional Block Converter")

Freq. Doubler
(GaAs)

DRO II

Freq. Doubler ≈10 + 0.2125 GHz DRO
(GaAs)            (like LNB Appl.)

DRO I

Freq. Doubler  ≈10 GHz DRO
(GaAs)         (like LNB Appl.)

Band Pass Filter
$f_{mod/up}$ = 2300 ... 2850 MHz

M5

TX$_{X\,or\,Y}$

RX$_H$

RX$_L$

LO (2.2 GHz)

Band Pass Filters
950 - 2150 MHz

$f_{mod}$ = 100 ... 650 MHz

M4

Antenna
+ Filter-Feed
$f_{beacon}$
$f_{down}$  $f_{up}$

LNA
SP 2    M1   SP 1   F1   M2   F2   M3

Mixer
(GaAs)

PA

Bidirectional Block Converter ("BBC")

Fig. 6

16

Fig. 7

EP 0 949 770 A1

**Fig. 8**

Fig. 9

Indoor Unit

Upstream Modulator

Receiver

DiSEqC™ Control Device (Transmitter)

100 - 650 MHz

Band Pass Filter 950 - 2150 MHz

Coupler

Transportation Cable (In - House)

100 - 2150 MHz

Outdoor Unit

Antenna + Filter-Feed

$f_{beacon}$
$f_{down}$
$f_{up}$

(Other Polarization, same circuit)

Freq. Doubler (GaAs) **DRO II**

Freq. Doubler ≈10 + 0.2125 GHz DRO (like LNB Appl.)

**DRO I**

Freq. Doubler ≈10 GHz DRO (like LNB Appl.)

Freq. Doubler (GaAs)

LNA

SP 2

M1

SP 1

F1

M2

F2

M3

M4

Mixer (GaAs)

PA

Switch

Polswitch

(Other Polarization)

Coupler

SP 3

Band Pass Filter 100 - 700 MHz

Band Pass Filter 950 - 2150 MHz

Band Pass Filter 22 KHz

DiSEqC™ Control Device (Receiver)

**Fig. 10**

Fig. 11

FEED I:

Transmit xpol,
Receive xpol

RESONATOR
Band Pass Filters
e.g.42.8 - 43.5 GHz

RESONATOR
Band Pass Filters
e.g. 40.5 - 42.8 GHz

$TXF_x$

$RXF_x$

BBC

("Bidirectional
Block
Converter")

$TX_X$

$RX_{HX}$

$RX_{LX}$

WAVEGUIDING
SYSTEM

Roof Area

FEED II:

Transmit ypol,
Receive ypol

$TXF_y$

$RXF_y$

BBC

("Bidirectional
Block
Converter")

$TX_Y$

$RX_{HY}$

$RX_{LY}$

**Fig. 12**

EP 0 949 770 A1

**European Patent Office**

## EUROPEAN SEARCH REPORT

Application Number

EP 98 10 6597

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| E | EP 0 851 618 A (TEXAS INSTRUMENTS INC) 1 July 1998<br>* abstract *<br>* column 5, line 42 - line 55 *<br>* column 6, line 11 - line 14 *<br>* column 7, line 34 - column 47 *<br>* claims 7,9 *<br>* figures 3-6 * | 1,7,9,<br>10,12 | H04H1/00<br>H04H9/00<br>H04N7/173 |
| X | EP 0 713 347 A (AT & T CORP) 22 May 1996<br>* abstract *<br>* column 3, line 49 - column 4, line 7 *<br>* column 14, line 11 - column 52 *<br>* claim 1 * | 1,7 | |
| A | * figures 1-4 * | 2,3 | |
| X | WO 97 48196 A (BELLSOUTH CORP) 18 December 1997<br>* abstract *<br>* page 8, line 24 - line 27 *<br>* page 11, line 9 - line 16 *<br>* page 12, line 2 - line 9 *<br>* claims 1,6 * | 12,14 | |
| A | * figures 1,3-5 * | 1,7,11 | TECHNICAL FIELDS SEARCHED (Int.Cl.6)<br><br>H04H<br>H04Q<br>H04N |
| A | WO 97 48191 A (BUGAS DMITRY ;GRAVES H DAVID (CA); BROADBAND NETWORKS INC (CA); SC) 18 December 1997<br>* abstract *<br>* page 20, line 20 - line 35 *<br>* claim 33 *<br>* figures 1-3,6 * | 1-3,7,<br>11,12 | |

-/--

The present search report has been drawn up for all claims

| Place of search | Date of completion of the search | Examiner |
|---|---|---|
| THE HAGUE | 2 September 1998 | Simon, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

**European Patent Office**

## EUROPEAN SEARCH REPORT

Application Number

EP 98 10 6597

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | WO 97 21276 A (STANFORD TELECOMM INC) 12 June 1997<br>* abstract *<br>* claim 1 *<br>* page 9, line 3 - page 10, line 8 *<br>* page 37, line 19 - page 40, line 28 *<br>* figures 1,17-21 *<br>--- | 1,5,7 | |
| A | EP 0 825 775 A (PHILIPS ELECTRONICS NV) 25 February 1998<br>* abstract *<br>* column 3, line 32 - line 48 *<br>----- | 12,13 | |
| | | | TECHNICAL FIELDS SEARCHED (Int.Cl.6) |

The present search report has been drawn up for all claims

| Place of search | Date of completion of the search | Examiner |
|---|---|---|
| THE HAGUE | 2 September 1998 | Simon, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)